# EUROPÄISCHE PATENTANMELDUNG

(11) **EP 4 850 931 A1**
(43) Veröffentlichungstag der Anmeldung: **09.12.2026**
(21) Anmeldenummer: 26179100.8
(22) Anmeldetag: 18.05.2026
(51) Int. Cl.: B60C 11/12, B60C 11/03, B60C 11/11

(54) **FAHRZEUGREIFEN**

(30) Priorität: 05.06.2025 DE 102025122195
(71) Anmelder: Continental Reifen Deutschland GmbH, 30175 Hannover (DE)
(72) Erfinder: Dr. Karow, Malte, 30175 Hannover (DE); Bauer, Claudia, 30175 Hannover (DE)
(74) Vertreter: Continental Corporation

(57) **Zusammenfassung**

Die Erfindung betrifft einen Fahrzeugreifen (1), insbesondere Winterreifen, umfassend einen Laufstreifen (2) mit durch Profilrillen (6) voneinander getrennten, radial erhabenen Profilblöcken (3), wobei wenigstens einer der Profilblöcke (3) einander kreuzende Feineinschnitte (4) und Quer-Feineinschnitte (5) aufweist, wobei wenigstens einer der Quer-Feineinschnitte (5) entlang seiner Längserstreckung wenigstens zwei unterschiedliche Längsabschnitte (7, 9) aufweist, wobei ein erster Längsabschnitt (7) der wenigstens zwei Längsabschnitte wenigstens einen der Feineinschnitte (4) kreuzt und ein zweiter Längsabschnitt (9) der wenigstens zwei Längsabschnitte frei von Kreuzungspunkten mit einem Feineinschnitt (4) ist, und wobei der zweite Längsabschnitt (9) in Bezug auf eine radial äußere Oberfläche (8) des zugehörigen Profilblocks (3) tiefer ausgebildet ist als der erste Längsabschnitt (7).

## Beschreibung

Die Erfindung betrifft einen Fahrzeugreifen, insbesondere einen Winterreifen, umfassend einen Laufstreifen mit durch Profilrillen voneinander getrennten, radial erhabenen Profilblöcken. Wenigstens einer der Profilblöcke weist einander kreuzende Feineinschnitte und Quer-Feineinschnitte auf.

Es sind Winterreifen, insbesondere für nordische Anwendungen, mit einer Vielzahl von Feineinschnitten zur Verbesserung der Leistung auf Eis und Schnee bekannt. Außerdem sind Quer-Feineinschnitte bekannt, die senkrecht zur Orientierung der Feineinschnitte angeordnet sind, um insbesondere die winterliche Querhaftung zu verbessern.

Beispielsweise beschreibt die JP 5679104 B2 einen Luftreifen, bei dem Profilblöcke eine Vielzahl linearer Feineinschnitte sowohl in Umfangsrichtung als auch in Querrichtung aufweisen. Die Feineinschnitte sind etwa rechtwinklig zueinander angeordnet, um eine gleichmäßige Blocksteifigkeit in allen Richtungen zu erreichen. Die bekannten Lösungen setzen typischerweise auf eine homogene Tiefe der Fein- und Quer-Feineinschnitte.

Die Aufgabe der vorliegenden Erfindung besteht darin, einen Fahrzeugreifen bereitzustellen, der bei gleichzeitig verbesserten Traktionseigenschaften bei Eis und Schnee eine erhöhte Nass- und Trockenbremsleistung auf Asphalt über die gesamte Lebensdauer gewährleistet. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugreifen umfasst einen Laufstreifen mit durch Profilrillen voneinander getrennten, radial erhabenen Profilblöcken, wobei wenigstens einer der Profilblöcke einander kreuzende Feineinschnitte und Quer-Feineinschnitte aufweist, wobei wenigstens einer der Quer-Feineinschnitte entlang seiner Längserstreckung wenigstens zwei unterschiedliche Längsabschnitte aufweist, wobei ein erster Längsabschnitt der wenigstens zwei Längsabschnitte wenigstens einen der Feineinschnitte kreuzt und ein zweiter Längsabschnitt der wenigstens zwei Längsabschnitte frei von Kreuzungspunkten mit einem Feineinschnitt ist, und wobei der zweite Längsabschnitt des Quer-Feineinschnitts in Bezug auf eine radial äußere Oberfläche des zugehörigen Profilblocks tiefer ausgebildet ist als der erste Längsabschnitt desselben Quer-Feineinschnitts. Der Fahrzeugreifen ist vorzugsweise ein Winterreifen.

Die beiden Längsabschnitte verlaufen in Bezug auf die radial äußere Oberfläche des zugehörigen Profilblocks auf unterschiedlichen Höhen. Anders gesagt weist der Rillengrund des Quer-Feineinschnitts unterschiedliche Abstände zur radial äußeren Oberfläche auf. Der erste Längsabschnitt bildet einen Ankerabschnitt mit geringerer Tiefe, im Bereich dessen der Profilblock eine höhere Steifigkeit aufweist. Der zweite Längsabschnitt mit der größeren Tiefe ist ein Flexabschnitt, im Bereich dessen der Profilblock eine höhere Flexibilität aufweist. Der zweite Längsabschnitt beginnt bzw. endet beabstandet zu einem Feineinschnitt. Insbesondere ist der zweite Längsabschnitt bzw. der Flexabschnitt entweder zwischen zwei Feineinschnitten oder zwischen einem Feineinschnitt und einer Blockkante des Profilblocks angeordnet. Dabei beginnt bzw. endet der zweite Längsabschnitt räumlich beabstandet zum jeweiligen Feineinschnitt bzw. der Blockkante.

Durch die Kombination aus Anker- und Flexabschnitten wird eine gleichmäßige Abnutzung des Profilblocks gefördert und die Leistung auf Schnee und Eis sowie auf Asphalt wird über die gesamte Lebensdauer verbessert.

Ein Feineinschnitt im Sinne der Erfindung bezeichnet einen schmalen, schlitzartigen Einschnitt im Profilblock, der im Wesentlichen quer zur Reifenumfangsrichtung, also im Wesentlichen in axialer Richtung des Fahrzeugreifens, verläuft. Ein Quer-Feineinschnitt im Sinne der Erfindung verläuft hingegen im Wesentlichen in Reifenumfangsrichtung. Als Profilblock ist ein erhabener Abschnitt der Lauffläche des Fahrzeugreifens zu verstehen, der durch Profilrillen von anderen Profilblöcken getrennt ist.

Der als "erster Längsabschnitt" bezeichnete Längsabschnitt des Quer-Feineinschnitts bezeichnet den Teil des Quer-Feineinschnitts, der eine geringere Tiefe aufweist und einen Feineinschnitt kreuzt. Dieser Abschnitt des Quer-Feineinschnitts unterstützt die Steifigkeit des Profilblocks. Der als "zweiter Längsabschnitt" bezeichnete Längsabschnitt des Quer-Feineinschnitts ist demgegenüber tiefer ausgebildet. "Unterschiedlich tief ausgebildet" bedeutet in diesem Zusammenhang, dass wenigstens zwei Längsabschnitte des Quer-Feineinschnitts, vorzugsweise zwei in Längserstreckung unmittelbar hintereinander angeordnete Längsabschnitte, auf unterschiedlichen Höhen zur radial äußeren Oberfläche des Profilblocks verlaufen.

Die radial äußere Oberfläche bezeichnet diejenige Fläche des Profilblocks, die im unbelasteten Zustand des Fahrzeugreifens am weitesten von der Rotationsachse des Fahrzeugreifens entfernt ist und die mit der Fahrbahn in Kontakt steht.

Wenn der erste Längsabschnitt den Feineinschnitt kreuzt, bedeutet dies, dass sich der Verlauf des Quer-Feineinschnitts und der Verlauf eines Feineinschnitts im Bereich des ersten Längsabschnitts überschneiden und einen Kreuzungspunkt bilden. Ein Abschnitt ist frei von Kreuzungspunkten, wenn innerhalb seiner Längserstreckung keine Überschneidung mit einem anderen Einschnitt, insbesondere dem genannten Feineinschnitt desselben Profilblocks, vorliegt.

Durch die alternierende Ausbildung von Anker- und Flexabschnitten innerhalb der Quer-Feineinschnitte wird eine ausgewogene Kombination aus Profilblocksteifigkeit und Flexibilität erreicht. Dies verbessert die Traktion auf Eis und Schnee und erhöht die Nass- und Trockenbremsleistung.

Vorzugsweise weist der jeweilige Längsabschnitt des Quer-Feineinschnitts in Bezug auf die radial äußere Oberfläche des zugehörigen Profilblocks in sich eine im Wesentlichen konstante Tiefe auf. Dies gewährleistet ein vorhersehbares Verformungsverhalten und stabilisiert das Abriebsbild. Zudem kann dadurch eine noch bessere Unterscheidung und Trennung zwischen Anker- und Flexabschnitten erfolgen.

Bevorzugt ist ein Übergangsabschnitt zwischen den in Längserstreckung des Quer-Feineinschnitts aneinander angrenzenden Längsabschnitten rampenförmig und/oder gekrümmt ausgebildet. Der Übergangsabschnitt zwischen zwei Längsabschnitten ist bevorzugt sanft gekrümmt ausgebildet, wobei der Übergangsabschnitt vorzugsweise als doppelte Krümmung mit Wendepunkt ausgebildet ist. Dadurch wird die Rissanfälligkeit minimiert und eine gleichmäßige Belastungsverteilung erreicht. Der Übergangsabschnitt verbindet zwei funktional unterschiedliche Längsabschnitte des Quer-Feineinschnitts miteinander und wird dabei ebenfalls als Teil der Längserstreckung des Quer-Feineinschnitts verstanden.

Ein Ausführungsbeispiel sieht vor, dass der Profilblock mindestens zwei zueinander parallel verlaufende Feineinschnitte sowie mindestens zwei zueinander parallel verlaufende Quer-Feineinschnitte aufweist, wobei wenigstens einer der Quer-Feineinschnitte entlang seiner Längserstreckung wenigstens drei hintereinander angeordnete Längsabschnitte aufweist, die alternierend einen zugehörigen Feineinschnitt kreuzen und frei von Kreuzungspunkten zu Feineinschnitten sind. Mit anderen Worten folgt in Längserstreckung des Quer-Feineinschnitts ein Ankerabschnitt auf einen Flexabschnitt, und umgekehrt.

Vorzugsweise weisen diejenigen Längsabschnitte, die einen zugehörigen Feineinschnitt kreuzen, in Bezug auf die radial äußere Oberfläche des zugehörigen Profilblocks eine im Wesentlichen konstante Tiefe auf. Mit anderen Worten sind die ersten Längsabschnitte im Wesentlichen gleich tief ausgeführt. Ferner können mehrere oder alle erste Längsabschnitte desselben Quer-Feineinschnitts eine in Längserstreckung identische Länge aufweisen.

Alternativ oder ergänzend weisen diejenigen Längsabschnitte, die frei von Kreuzungspunkten zu Feineinschnitten sind, in Bezug auf die radial äußere Oberfläche des zugehörigen Profilblocks ebenfalls eine im Wesentlichen konstante Tiefe auf. Demnach sind die zwei Längsabschnitte im Wesentlichen gleich tief ausgeführt. Denkbar ist, dass mehrere oder alle zweite Längsabschnitte desselben Quer-Feineinschnitts eine in Längserstreckung identische Länge aufweisen.

Der Feineinschnitt desselben Profilblocks kann entlang seiner Längserstreckung eine konstante Tiefe aufweisen.

Der Feineinschnitt kann aber auch an die Geometrie des Profilblocks sowie die Ausgestaltung der Quer-Feineinschnitte angepasst sein, um die erfindungsgemäßen Vorteile zu erzielen. In diesem Sinn umfasst der jeweilige Feineinschnitt entlang seiner Längserstreckung mehrere unterschiedlich tief ausgebildete Längsabschnitte.

Nach einem Ausführungsbeispiel weist der jeweilige Feineinschnitt entlang seiner Längserstreckung drei hintereinander angeordnete Längsabschnitte auf, wovon der mittlere Längsabschnitt tiefer ausgebildet ist als die beiden äußeren Längsabschnitte. Demnach sind die Längsabschnitte des Feineinschnitts, die näher an der Profilrille angeordnet sind, flacher ausgestaltet als der mittlere Längsabschnitt.

Bevorzugt münden die beiden äußeren Längsabschnitte jeweils in eine zugehörige Profilrille, insbesondere eine Umfangsrille oder eine Quer- oder Schrägrille. Analog zu den obigen Ausführungen realisiert die flachere Ausführung der äußeren Längsabschnitte des Feineinschnitts eine höhere Steifigkeit des Profilblocks im Mündungsbereich zwischen Feineinschnitt und Profilrille.

Nach einer Ausführungsform ist der jeweilige Feineinschnitt derart ausgebildet, dass er nur am mittleren Längsabschnitt der drei Längsabschnitte, als im tieferen Verlauf des Feineinschnitts, von einem oder mehreren Quer-Feineinschnitten gekreuzt wird. Die äußeren Längsabschnitte sind demgegenüber frei von Kreuzungspunkten mit Quer-Feineinschnitten ausgeführt. Dadurch wird im Kreuzungsbereich des tiefer ausgebildeten mittleren Längsabschnitts des Feineinschnitts ein Quer-Feineinschnitt geführt, der flacher ausgebildet ist, was eine gezielte Abstimmung der Profilblockflexibilität ermöglicht.

Alternativ oder ergänzend ist der jeweilige Feineinschnitt in der Draufsicht zickzackförmig und/oder wellenförmig ausgebildet. Ferner alternativ oder ergänzend ist der jeweilige Quer-Feineinschnitt in der Draufsicht im Wesentlichen geradlinig verlaufend ausgebildet. "In der Draufsicht" meint die Betrachtung der Lauffläche senkrecht von oben, also aus der Richtung, in der die Lauffläche mit der Fahrbahn in Kontakt steht.

Analog zu den obigen Ausführungen zum Quer-Feineinschnitt kann auch zwischen den Längsabschnitten des Feineinschnitts ein Übergangsabschnitt vorgesehen sein, um scharfe Kanten oder Ecken zu vermeiden.

Die hier vorgeschlagene Struktur des Fahrzeugreifens verbessert eine Bodenhaftung, erhöht eine Wasserableitungskapazität und optimiert eine Blockstabilität, wodurch die Lebensdauer des Fahrzeugreifens verlängert und die Fahrsicherheit verbessert werden. Insbesondere wird der Laufstreifen gleichmäßiger abgenutzt.

Weitere Merkmale, Vorteile und Einzelheiten der Erfindung werden nun anhand der Zeichnungen, die ein Ausführungsbeispiel der Erfindung zeigen, näher beschrieben, wobei gleiche oder ähnliche Bauteile mit demselben Bezugszeichen versehen sind. Dabei zeigen
- Fig. 1: eine erste schematische Perspektivdarstellung eines Abschnitts eines Laufstreifens eines erfindungsgemäßen Fahrzeugreifens in einem Ausgangszustand,
- Fig. 2: eine stark vereinfachte Projektion des Profilblocks des Laufstreifens gemäß Figur 1 zur Veranschaulichung der Ausgestaltung eines exemplarischen Quer-Feineinschnitts mit ihn kreuzenden Feineinschnitten,
- Fig. 3: eine stark vereinfachte Projektion des Profilblocks des Laufstreifens gemäß den Figuren 1 und 2 zur Veranschaulichung der Ausgestaltung eines exemplarischen Feineinschnitts mit ihn kreuzenden Quer-Feineinschnitten, und
- Fig. 4: eine zweite schematische Perspektivdarstellung des Laufflächenabschnitts gemäß den Figuren 1 bis 3 in einem teilweise verschlissenen Zustand.

Gemäß der Erfindung ausgeführte Fahrzeugreifen 1 sind Reifen für Kraftfahrzeuge, insbesondere für mehrspurige Kraftfahrzeuge, vorzugsweise PKW-Reifen für Straßenanwendungen. Der Fahrzeugreifen 1 ist als Winterreifen ausgeführt.

Der Fahrzeugreifen 1 weist einen Laufstreifen 2 auf, der durch Profilrillen 6 wie Umfangsrillen, Schrägrillen und Nebenschrägrillen in eine Vielzahl von radial erhabenen Profilblöcken 3 unterteilt ist. Entsprechend ist jeder Profilblock 3 von den benachbarten Profilblöcken 3 durch Profilrillen 6 getrennt.

In diesem Ausführungsbeispiel weisen alle gezeigten Profilblöcke 3 einander kreuzende Feineinschnitte 4 und Quer-Feineinschnitte 5 auf. Die Feineinschnitte 4 sind im Wesentlichen quer zur Reifenumfangsrichtung 14, also in axialer Richtung 15, ausgerichtet, während die Quer-Feineinschnitte 5 im Wesentlichen in Reifenumfangsrichtung 14 ausgerichtet sind.

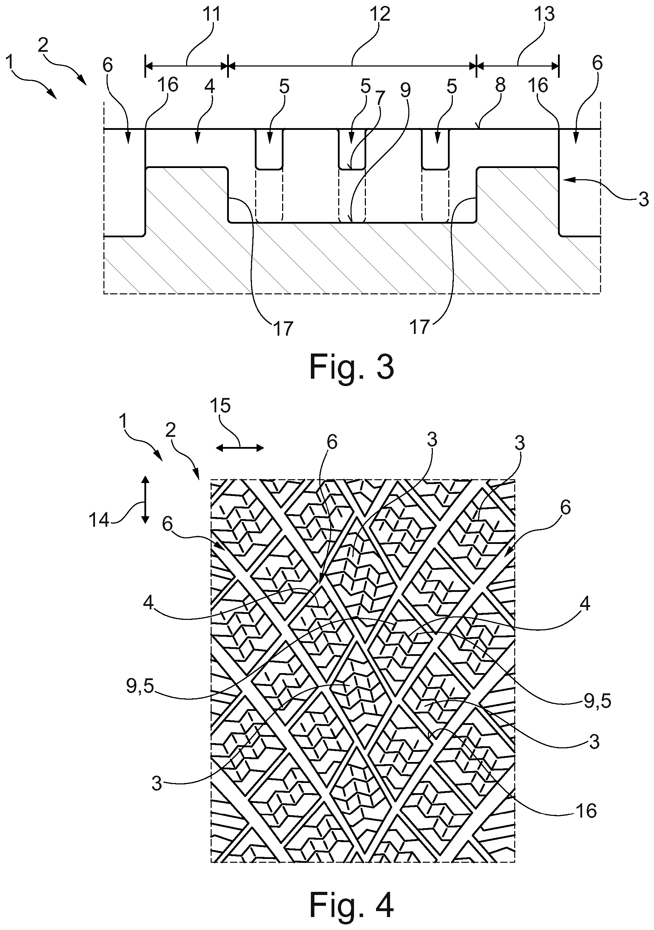

Die Feineinschnitte 4 sind hier in der Draufsicht zickzackförmig ausgeführt und münden beiderends in eine jeweilige Profilrille 6, vgl. auch Figur 4. Die Quer-Feineinschnitte 5 verlaufen im Wesentlichen geradlinig und enden entweder zwischen zwei benachbarten Feineinschnitten 4 oder zwischen einem Feineinschnitt und einer Blockkante 16 des zugehörigen Profilblocks 3.

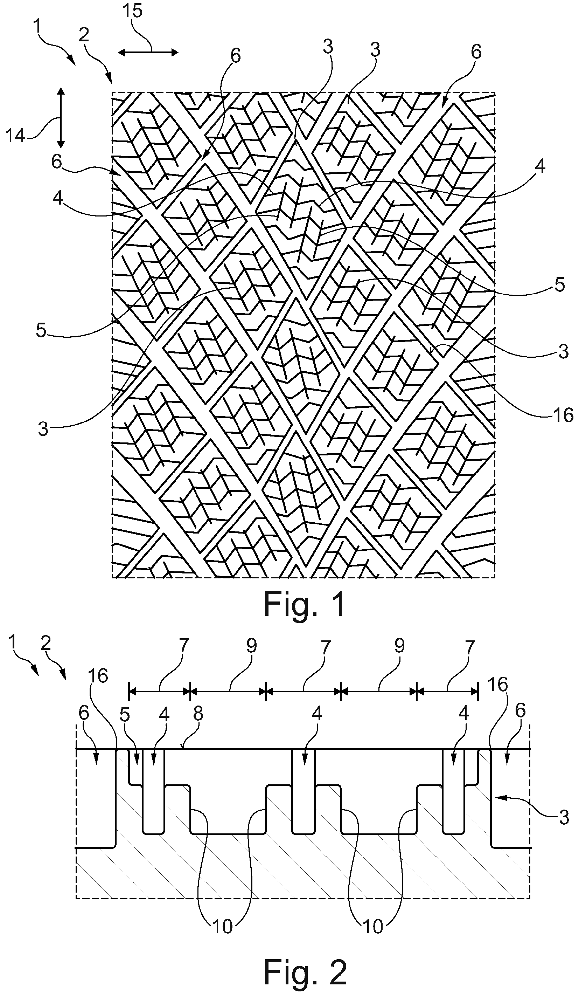

Wie insbesondere aus einer vereinfachten Projektion eines exemplarischen Quer-Feineinschnitts 5 gemäß Figur 2 hervorgeht, weist wenigstens einer der Quer-Feineinschnitte 5 des jeweiligen Profilblocks 3 entlang seiner Längserstreckung unterschiedliche Längsabschnitte auf, wobei der exemplarische Quer-Feineinschnitt 5 vor den zwei den Profilblock 16 begrenzenden Profilrillen 6 enden. Vorliegend ist der Quer-Feineinschnitt 5 in mehrere erste Längsabschnitte 7 und mehrere zweite Längsabschnitte 9 unterteilt, die in Längserstreckung, hier von links nach rechts, abwechselnd angeordnet sind und unterschiedliche Funktionen erfüllen. In Längserstreckung folgt also auf einen ersten Längsabschnitt 7 ein zweiter Längsabschnitt 9 und umgekehrt.

Der jeweilige erste Längsabschnitt 7 ist in Bezug auf eine radial äußere Oberfläche 8 des Profilblocks 3 flacher ausgebildet als der jeweilige zweite Längsabschnitt 9.

Jeder erste Längsabschnitt 7 kreuzt einen zugehörigen Feineinschnitt 4. Der jeweilige zweite Längsabschnitt 9 des Quer-Feineinschnitts 5 verläuft frei von Kreuzungspunkten mit einem Feineinschnitt 4 und ist in Bezug auf die radial äußere Oberfläche 8 des Profilblocks 3 tiefer ausgebildet als der erste Längsabschnitt 7. Außerdem beginnt und endet der jeweilige zweite Längsabschnitt 9 beabstandet zum Feineinschnitt 4 und einer Blockkante 16 des Profilblocks 3.

Die beiden Längsabschnitte 7 und 9 sind über einen Übergangsabschnitt 10 miteinander verbunden. Der Übergangsabschnitt 10 weist vorzugsweise eine doppelte Krümmung mit einem Wendepunkt auf, sodass eine gleichmäßige Belastungsverteilung im Bereich des Übergangsabschnitts 10 zwischen den Längsabschnitten 7 und 9 erreicht und scharfe Kanten vermieden werden.

Die ersten Längsabschnitte 7, die als Ankerabschnitte des Quer-Feineinschnitts 5 zu verstehen sind, und die zweiten Längsabschnitte 9, die als Flexabschnitte des Quer-Feineinschnitts 5 zu verstehen sind, weisen in Längserstreckung jeweils in sich eine im Wesentlichen konstante Tiefe auf. Dadurch wird ein gleichmäßiges Verformungsverhalten des Profilblocks 3 gefördert.

Die Feineinschnitte 4 sind entlang ihrer Längserstreckung entweder konstant tief oder können, wie in Figur 3 gezeigt ist, mehrere unterschiedlich tief ausgebildete Längsabschnitte aufweisen. Nach Figur 3 weist der exemplarisch dargestellte Feineinschnitt 4 in der vereinfachten Projektion drei hintereinander angeordnete Längsabschnitte 11, 12, 13 auf, wobei der mittlere Längsabschnitt 12 tiefer ausgebildet ist als die beiden äußeren Längsabschnitte 11 und 13. Die äußeren Längsabschnitte 11 und 13 münden jeweils in eine zugehörige Profilrille 6. Die flachere Ausführung der äußeren Längsabschnitte 11 und 13 erhöht die Steifigkeit des Profilblocks 3 im Bereich der Mündungen zur Profilrille 6.

Der Feineinschnitt 4 ist vorliegend ferner so ausgebildet, dass er nur im Bereich des tieferen, mittleren Längsabschnitts 12 von einem ersten Längsabschnitt 7 des Quer-Feineinschnitts 5 gekreuzt wird. Die äußeren Längsabschnitte 11 und 13 sind hingegen frei von Kreuzungspunkten mit Quer-Feineinschnitten 5. In Figur 3 sind die zweiten Längsabschnitte 9 der Quer-Feineinschnitte 5 gestrichelt dargestellt, um zu verdeutlichen, dass der mittlere Längsabschnitt 12 des Feineinschnitts 4 und die zweiten Längsabschnitte 9 der Quer-Feineinschnitte 5 im Wesentlichen dieselbe Tiefe aufweisen. Die Längsabschnitte 11, 12, 13 der Feineinschnitte 4 weisen in Längserstreckung jeweils in sich eine im Wesentlichen konstante Tiefe auf.

Analog zu Figur 2 sind die jeweils benachbarten Längsabschnitte 11 - 13 über einen Übergangsabschnitt 17 mit einer jeweils doppelten Krümmung mit einem Wendepunkt miteinander verbunden.

Figur 4 soll unter Berücksichtigung der Darstellung nach Figur 1 verdeutlichen, dass der Laufstreifen 2 durch die Gestaltung der Feineinschnitte 4 und Quer-Feineinschnitte 5, insbesondere deren Längsabschnitte 7, 9, 11, 12, 13, eine gleichmäßige Abnutzung aufweist. In Figur 4 ist ein teilweise verschlissener Zustand des Laufstreifens 2 gezeigt. Dabei bleibt aufgrund der speziellen Gestaltung der Feineinschnitte 4 und Quer-Feineinschnitte 5 die strukturelle Integrität und Leistungsfähigkeit der Profilblöcke 3 auch bei fortschreitendem Abrieb erhalten. Mit fortschreitender Lebensdauer sind ab einem bestimmten Abrieb bzw. einer bestimmten Restprofilstärke nur noch die zweiten Längsabschnitte 9 der Quer-Feineinschnitte 5 sichtbar, wie deutlich in Figur 4 dargestellt ist. Die Quer-Feineinschnitte 5 liegen demnach ab einer bestimmten Restprofilstärke nur noch segmentiert vor. Der Fahrzeugreifen 1 gewährleistet dadurch über die gesamte Lebensdauer hinweg eine hohe Traktion auf winterlichen Fahrbahnen sowie eine verbesserte Nass- und Trockenbremsleistung auf Asphalt.

### Bezugszeichenliste

- 1: Fahrzeugreifen
- 2: Laufstreifen
- 3: Profilblock
- 4: Feineinschnitt
- 5: Quer-Feineinschnitt
- 6: Profilrille
- 7: Erster Längsabschnitt des Quer-Feineinschnitts
- 8: Radial äußere Oberfläche
- 9: Zweiter Längsabschnitt des Quer-Feineinschnitts
- 10: Übergangsabschnitt
- 11: Äußerer Längsabschnitt des Feineinschnitts
- 12: Mittlerer Längsabschnitt des Feineinschnitts
- 13: Äußerer Längsabschnitt des Feineinschnitts
- 14: Reifenumfangsrichtung
- 15: Axiale Richtung
- 16: Blockkante
- 17: Übergangsabschnitt

## Patentansprüche

1. Fahrzeugreifen (1), insbesondere Winterreifen, umfassend einen Laufstreifen (2) mit durch Profilrillen (6) voneinander getrennten, radial erhabenen Profilblöcken (3), wobei wenigstens einer der Profilblöcke (3) einander kreuzende Feineinschnitte (4) und Quer-Feineinschnitte (5) aufweist, **dadurch gekennzeichnet, dass** wenigstens einer der Quer-Feineinschnitte (5) entlang seiner Längserstreckung wenigstens zwei unterschiedliche Längsabschnitte (7, 9) aufweist, wobei ein erster Längsabschnitt (7) der wenigstens zwei Längsabschnitte wenigstens einen der Feineinschnitte (4) kreuzt und ein zweiter Längsabschnitt (9) der wenigstens zwei Längsabschnitte frei von Kreuzungspunkten mit einem Feineinschnitt (4) ist, und wobei der zweite Längsabschnitt (9) in Bezug auf eine radial äußere Oberfläche (8) des zugehörigen Profilblocks (3) tiefer ausgebildet ist als der erste Längsabschnitt (7).

2. Fahrzeugreifen (1) nach Anspruch 1, **dadurch gekennzeichnet, dass** der jeweilige Längsabschnitt (7, 9) des Quer-Feineinschnitts (5) in Bezug auf die radial äußere Oberfläche (8) des zugehörigen Profilblocks (3) in sich eine im Wesentlichen konstante Tiefe aufweist.

3. Fahrzeugreifen (1) nach Anspruch 1 oder Anspruch 2, **dadurch gekennzeichnet, dass** ein Übergangsabschnitt (10) zwischen den in Längserstreckung des Quer-Feineinschnitts (5) aneinander angrenzenden Längsabschnitten (7, 9) rampenförmig und/oder gekrümmt ausgebildet ist.

4. Fahrzeugreifen (1) nach einem der vorhergehenden Ansprüche, **dadurch gekennzeichnet, dass** der Profilblock (3) mindestens zwei zueinander parallel verlaufende Feineinschnitte (4) sowie mindestens zwei zueinander parallel verlaufende Quer-Feineinschnitte (5) aufweist, wobei wenigstens einer der Quer-Feineinschnitte (5) entlang seiner Längserstreckung wenigstens drei hintereinander angeordnete Längsabschnitte (7, 9) aufweist, die alternierend einen zugehörigen Feineinschnitt (4) kreuzen und frei von Kreuzungspunkten zu Feineinschnitten (4) sind.

5. Fahrzeugreifen (1) nach Anspruch 4, **dadurch gekennzeichnet, dass** diejenigen Längsabschnitte (7), die einen zugehörigen Feineinschnitt (4) kreuzen, in Bezug auf die radial äußere Oberfläche (8) des zugehörigen Profilblocks (3) eine im Wesentlichen konstante Tiefe aufweisen.

6. Fahrzeugreifen (1) nach Anspruch 4 oder Anspruch 5, **dadurch gekennzeichnet, dass** diejenigen Längsabschnitte (9), die frei von Kreuzungspunkten zu Feineinschnitten (4) sind, in Bezug auf die radial äußere Oberfläche (8) des zugehörigen Profilblocks (3) eine im Wesentlichen konstante Tiefe aufweisen.

7. Fahrzeugreifen (1) nach einem der vorhergehenden Ansprüche, **dadurch gekennzeichnet, dass** der jeweilige Feineinschnitt (4) entlang seiner Längserstreckung in Bezug auf die radial äußere Oberfläche (8) des zugehörigen Profilblocks (3) mehrere unterschiedlich tief ausgebildete Längsabschnitte (11, 12, 13) aufweist.

8. Fahrzeugreifen (1) nach Anspruch 7, **dadurch gekennzeichnet, dass** der jeweilige Feineinschnitt (4) entlang seiner Längserstreckung drei hintereinander angeordnete Längsabschnitte (11, 12, 13) aufweist, wovon der mittlere Längsabschnitt (12) der drei Längsabschnitte in Bezug auf die radial äußere Oberfläche (8) tiefer ausgebildet ist als die beiden äußeren Längsabschnitte (11, 13).

9. Fahrzeugreifen (1) nach Anspruch 8, **dadurch gekennzeichnet, dass** die beiden äußeren Längsabschnitte (11, 13) jeweils in eine zugehörige Profilrille (6) des Laufstreifens (2) münden.

10. Fahrzeugreifen (1) nach Anspruch 8 oder Anspruch 9, **dadurch gekennzeichnet, dass** der jeweilige Feineinschnitt (4) derart ausgebildet ist, dass er nur am mittleren Längsabschnitt (12) der drei Längsabschnitte von wenigstens einem Quer-Feineinschnitt (5) gekreuzt wird.

11. Fahrzeugreifen (1) nach einem der vorhergehenden Ansprüche, **dadurch gekennzeichnet, dass** der jeweilige Feineinschnitt (4) in der Draufsicht zickzackförmig und/oder wellenförmig ausgebildet ist.

12. Fahrzeugreifen (1) nach einem der vorhergehenden Ansprüche, **dadurch gekennzeichnet, dass** der jeweilige Quer-Feineinschnitt (5) in der Draufsicht im Wesentlichen geradlinig verlaufend ausgebildet ist.
